# EUROPÄISCHE PATENTSCHRIFT

(11) **EP 3 577 240 B1**
(45) Veröffentlichungstag und Bekanntmachung des Hinweises auf die Patenterteilung: **05.04.2023**
(21) Anmeldenummer: 17702640.8
(22) Anmeldetag: 02.02.2017
(51) Int. Cl.: C21D 7/06, B21D 53/26, B60B 3/04, C21D 9/34

(54) **VERFAHREN ZUR HERSTELLUNG EINES FAHRZEUGRADES IN STAHLBLECHBAUWEISE**
METHOD FOR PRODUCING A VEHICLE WHEEL FROM STEEL PLATE
PROCÉDÉ DE FABRICATION D'UNE ROUE DE VÉHICULE EN TÔLE D'ACIER

(43) Veröffentlichungstag der Anmeldung: 11.12.2019
(73) Patentinhaber: ThyssenKrupp Steel Europe AG, 47166 Duisburg (DE); thyssenkrupp AG, 45143 Essen (DE)
(72) Erfinder: PIERONEK, David, 44329 Dortmund (DE)
(74) Vertreter: ThyssenKrupp Steel Europe AG
(86) Internationale Anmeldenummer: PCT/EP2017/052275
(87) Internationale Veröffentlichungsnummer: WO 2018/141391

(56) Entgegenhaltungen:
- DE-T2- 60 014 243
- JP-A- 2001 246 901
- KR-A- 20100 035 817

## Beschreibung

### Technisches Gebiet

Die Erfindung betrifft ein Verfahren zur Herstellung eines Fahrzeugrades in Blechbauweise gemäß dem Oberbegriff des Anspruchs 1. Ferner betrifft die Erfindung eine Verwendung des nach dem erfindungsgemäßen Verfahren hergestellten Fahrzeugrades.

### Technischer Hintergrund

Fahrzeugräder sind Sicherheitsbauteile und müssen hohe mechanische und dynamische Wechselbeanspruchungen im Betrieb/Einsatz dauerfest aufnehmen können. Neben der Lebensdauer und Steifigkeit des Fahrzeugrades spielt auch das Gewicht eine wichtige Rolle, welches sich direkt auf die Materialkosten, ungefederten Massen, rotatorische Massenträgheit, das Schwingverhalten (NVH) und auch auf den Spritverbrauch auswirken kann.

Konventionell hergestellte Fahrzeugräder, beispielsweise Kraftfahrzeugräder, insbesondere in Stahlblechbauweise bestehen aus einer Felge zur Aufnahme eines Reifens und einer an die Felge stoff-, kraft- und/oder formschlüssig angebundene Radschüssel mit einem Anbindungsbereich zur lösbaren Anbindung an einen Radträger. Die Radkomponenten werden konventionell aus Stahlwerkstoffen durch Kaltumformen, insbesondere im Mehrstufenverfahren (Tiefziehen, Drückwalzen, Profilieren) hergestellt. Konventionell werden warmgewalztes und insbesondere gebeiztes Bandmaterial aus mikrolegierten Baustählen und Dualphasen-Stählen mit Zugfestigkeiten zwischen 400 und 600 MPa zur Herstellung der Fahrzeugkomponenten verwendet. Als thermische Fügetechnik wird zur Verbindung der Fahrzeugkomponenten (Radschüssel und Felge) konventionell ein MAG- oder Widerstandspunkt-Schweißen umgesetzt.

Eine Gewichtsreduzierung kann erreicht werden, wenn zum einen Material mit höherer Festigkeit bzw. Schwingfestigkeit zur sicheren Aufnahme der Betriebslasten verwendet wird, und zum anderen Geometrieanpassungen zur Kompensierung der Steifigkeitsverluste aufgrund geringeren Materialdicken umgesetzt werden. Mit ansteigender Festigkeit der Materialien nimmt aber in der Regel auch die Umformbarkeit des Materials ab. Somit stößt der Leichtbau mit kaltumformbaren Stählen an technische Grenzen. Abhilfe kann in diesen Fällen die sogenannte "Warmumformung" schaffen, wodurch die Anforderung nach hohen Umformgraden bei gleichzeitig hohen Festigkeiten der endgeformten Komponenten erfüllt werden kann.

Leichtbaupotential bieten heutzutage Warmumformstähle, wie beispielsweise Mangan-Bor-Stähle, welche mechanische Lasten wie dynamische Wechselbeanspruchungen aufnehmen können. Als Stand der Technik insbesondere zur Herstellung von Radschüsseln aus Warmumformstähle, welche zumindest bereichsweise pressgehärtet werden können, wird auf die Druckschriften DE 10 2007 019 485 A1, DE 10 2013 114 245 B3 und DE 10 2014 108 901 B3 verwiesen.

Untersuchungen haben gezeigt, dass (Warmumform-) Stähle mit überwiegend Martensit-Gefüge, wie zum Beispiel Mangan-Bor-, Vergütungs- und lufthärtende Stähle, gegenüber den konventionell verwendeten Dualphasen- und Baustählen, insbesondere für die Radschüssel, eine deutlich gesteigerte zyklische Biegewechselfestigkeit aufweisen. Die positiven Eigenschaften der Stähle mit überwiegend Martensit-Gefüge werden durch den Nachteil wieder kompensiert, dass durch die Warmumformung an der Komponentenoberfläche lokale Risse in oberflächennahen Schichten entstehen können, die unter zyklischer Belastung als Rissstarter fungieren und damit die Lebensdauer negativ beeinträchtigen können. Die sich in den oberflächennahen Schichten ausbildenden Defekte sind unterschiedlich in Art und Häufigkeit, wie Untersuchungen gezeigt haben, so dass sich große Streuungen ergeben, die im Sinne einer optimalen Bauteilauslegung nicht zielführend sind.

Die zyklische Bauteilperformance kann auch nach der Warmumformung durch weiterführende Bearbeitung negativ beeinflusst werden, beispielsweise durch Beschnitt mittels Laser oder durch thermische Fügeverbindungen können neben der geometrischen Kerbe auch zu einer metallurgischen Kerbwirkung führen, so dass eine ausreichende Betriebsfestigkeit und Sicherheit oftmals nicht gewährleistet werden kann.

Ein gattungsgemäßes Verfahren zur Herstellung von Fahrzeugrädern in Stahlblechbauweise geht auf eine noch nicht veröffentlichte Anmeldung mit der Anmeldenummer PCT/EP2017/050957 der Anmelderin zurück.

Ein weiteres gattungsgemäße Verfahren ist aus KR20100035817 A bekannt.

In Bezug auf den Stand der Technik besteht weiteres Verbesserungspotential hinsichtlich der Herstellung eines Fahrzeugrades, welches sich durch ein geringes Gewicht mit gleichzeitig hoher Betriebsfestigkeit und Sicherheit auszeichnet.

### Zusammenfassung der Erfindung

Der Erfindung liegt somit die Aufgabe zu Grunde, ein Verfahren zur Herstellung von Fahrzeugrädern bereitzustellen, welches eine hohe Betriebsfestigkeit und Sicherheit der hergestellten Fahrzeugräder bei geringem Gewicht gewährleisten kann, sowie eine entsprechende Verwendung der hergestellten Fahrzeugräder anzugeben.

Gelöst wird diese Aufgabe durch ein Verfahren mit den Merkmalen des Patentanspruchs 1.

Die Komponenten des Fahrzeugrades, wie zum Beispiel die Radschüssel und die Felge werden mittels Druckumformen, Zugumformen, Zugdruckumformen, Biegeumformen, Schubumformen, Drückwalzen, Tiefziehen, insbesondere mittels Warmumformung mit optional zumindest teilweiser (Press-) Härtung, oder mittels einer Kombination der genannten Herstellungsverfahren geformt.

Für die Herstellung respektive das Formen der Komponenten des Fahrzeugrades, vorzugsweise der Radschüssel, werden vergütbare Stahlwerkstoffe bereitgestellt, welche zumindest bereichsweise einer (ersten) Wärmbehandlung unterzogen werden, insbesondere oberhalb der A_{c1}-Temperatur, vorzugsweise oberhalb der A_{c3}-Temperatur erwärmt, warmumgeformt und zumindest bereichsweise durch Abkühlen pressgehärtet werden (direkte Warmumformung) oder beispielsweise kaltumgeformt werden, wobei die Form, welche im Wesentlichen der Endgeometrie der entsprechenden Komponente entspricht, oberhalb der A_{c1}-Temperatur, vorzugsweise oberhalb der A_{c3}-Temperatur erwärmt und anschließend zumindest bereichsweise durch Abkühlen gehärtet werden (indirekte Warmumformung). Dabei entspricht die A_{c1}-Temperatur der Temperatur in Abhängigkeit von der Zusammensetzung des Stahlwerkstoffes, bei welcher sich das Gefüge in Austenit umwandelt respektive die A_{c3}-Temperatur der Temperatur, bei der die Umwandlung vollständig in Austenit abgeschlossen ist. Die zumindest bereichsweise Wärmebehandlung kann auch an der oder den Komponenten (Felge, Radschüssel) des Fahrzeugrades im zusammengebauten Zustand erfolgen, wobei unter zusammengebauter Zustand die miteinander verbundenen Komponenten (Felge und Radschüssel), also das Fahrzeugrad gemeint ist, wobei eine Erwärmung zumindest bereichsweise oberhalb der A_{c1}-Temperatur, vorzugsweise oberhalb der A_{c3}-Temperatur durchgeführt, und anschließend zumindest bereichsweise ein Härten durch Abkühlen durchgeführt wird. Durch die zumindest erste Wärmebehandlung kann zumindest bereichsweise oder vollständig in der oder den Komponenten einzeln oder im zusammengebauten Zustand ein Härtegefüge durch gezielte Abkühlung eingestellt werden. Das Härtegefüge definiert sich durch ein im Wesentlichen martensitisches Gefüge, wobei Martensit mit mindestens 60 Vol.-%, insbesondere mindestens 70 Vol.-%, vorzugsweise mindestens 80 Vol.-%, besonders bevorzugt mindestens 90 Vol.-% im vergüteten Gefüge vorliegt. Der Martensit kann beispielsweise auch durch eine gezielte Prozessführung oder nachträgliche Wärmebehandlung angelassen sein. Die zumindest bereichsweise (erste) Wärmebehandlung respektive Erwärmung auf mindestens eine Teilaustenitisierungstemperatur (oberhalb der A_{c1}-Temperatur) erfolgt mittels geeigneten Mitteln, beispielsweise mittels Induktoren, Ofen, Laser, Kontakterwärmung oder Brennern.

Die Radschüssel wird stoff-, kraft- und/oder formschlüssig an die Felge angebunden. Vorzugsweise wird die Radschüssel zumindest teilweise über eine Fügenaht, welche als MIG-, MAG-, Laser-, Schweiß- oder Lötnaht ausgeführt sein kann, an die Felge angebunden. Alternativ kann die Radschüssel auch mittels Kleben und/oder Widerstandsschweißen an die Felge angebunden werden. Alternativ oder zusätzlich kann auch eine kraftschlüssige Anbindung durch einen (zusätzlichen) Presssitz zwischen Radschüssel und Felge vorgesehen sein, insbesondere zur Entlastung zusätzlicher Verbindungsmittel. Der Einsatz von formschlüssigen, mechanischen Fügeverfahren, wie zum Beispiel Clinchen, Nieten oder mit Funktionselementen ist ebenfalls denkbar. Die Anbindung zwischen Radschüssel und Felge muss nicht zwangsläufig konventionell im sogenannten "Tiefbett" eines Fahrzeugrades erfolgen. Fahrzeugradkonstruktionen, wie zum Beispiel sogenannte Semi- oder Full-Face-Scheibenräder oder mit mehrteiliger Ausführung sind ebenfalls denkbar.

Der Erfinder hat festgestellt, dass durch ein zumindest bereichsweises Strahlen respektive strahltechnische Behandlung, insbesondere des wärmebehandelten Bereiches respektive des vergüteten Bereichs, die aus der direkten oder indirekten Warmumformung respektive (Press-) Härten resultierenden Defekte in oberflächennahen Schichten des Stahlwerkstoffes insbesondere an der Oberfläche eingeebnet und vergleichmäßigt werden können, was sich aufgrund der hohen Werkstofffestigkeit und den zusätzlich eingebrachten Druckspannungen, insbesondere im vergüteten (wärmebehandelten) Bereich im Wesentlichen positiv auf die Komponenten-Lebensdauer und damit auf die Betriebsfestigkeit und Sicherheit des Fahrzeugrades auswirken kann. So wird gemäß einem ersten Aspekt der Erfindung nach der ersten Wärmebehandlung an der Felge und/oder der Radschüssel einzeln oder an der Felge und/ oder der Radschüssel im zusammengebauten Zustand zumindest bereichsweise ein Strahlen durchgeführt. Für das Strahlen werden Partikel eingesetzt, die eine Körnung insbesondere in der Größenordnung zwischen 0,02 und 4,0 mm, insbesondere zwischen 0,1 und 2,0 mm, vorzugsweise zwischen 0,3 und 1,0 mm, und insbesondere eine Härte größer als 400HV1, insbesondere größer als 500HV1, vorzugsweise größer als 600HV1 aufweisen, wobei HV die Härte nach Vickers definiert. Sind größere Bereiche einer Komponente oder die vollständige Komponente zu strahlen, wird erfindungsgemäß das Schleuderradstrahlen eingesetzt, durch welches wirtschaftlich hohe Stückzahlen, wie sie beim Fahrzeugradbau durchgesetzt werden, gestrahlt werden können. Insbesondere auch aufgrund der Symmetrie und der "runden" Form des Kraftfahrzeugrades ist das Schleuderradstrahlen besonders geeignet.

Gemäß einer weiteren Ausgestaltung des erfindungsgemäßen Verfahrens werden Partikel zum Strahlen verwendet, welche aus Metallkorn, Glasperlen oder Keramikperlen bestehen. Auch Mischungen der vorgenannten Partikel sind möglich. Vorzugsweise wird ein Metallkorn, insbesondere ein Stahldrahtkorn verwendet, welches je nach Zusammensetzung zu Stücken (Partikel) in der Größenordnung beispielsweise von bis zu 2 mm aus einem Draht abgeschnitten werden und eine Härte größer als 600HV1 aufweisen können. Die Form bzw. Gestalt der Partikel kann beliebig sein, bevorzugt eingesetzt werden aber kugelige bzw. arrondierte Formen, um den zu strahlenden Bereich, insbesondere nicht durch Verwendung von spitzförmigen Partikeln (zusätzlich) zu beschädigen.

Gemäß einer weiteren Ausgestaltung des erfindungsgemäßen Verfahrens wird das Strahlen zumindest bereichsweise auf der Oberfläche und/oder an der Schnittkante der Felge und/oder der Radschüssel einzeln durchgeführt, insbesondere wenn an der Felge und/oder der Radschüssel eine Wärmebehandlung respektive Vergütung erfolgt ist. Vorzugsweise wird die vollständige Oberfläche der Komponente(n) vor dem Zusammenbau gestrahlt, um Defekte, die sich im Zuge der direkten oder indirekten Warmumformung ausgebildet haben, im Wesentlichen zu kompensieren. Alternativ oder zusätzlich können auch lokal kritische Stellen, insbesondere die Schnittkanten, die sich meistens durch einen zusätzlichen Beschnitt, der in der Regel insbesondere nach der direkten oder indirekten Warmumformung durch ein Laserbeschnitt durchgeführt wird, entstehen, gestrahlt werden, um insbesondere den negativen Einfluss durch die mittels Laserbeschnitt lokal eingebrachte Wärme (Wärmeeinflusszone) durch Verfestigen der Schnittkante respektive des um die Schnittkante angeordneten Bereichs zu kompensieren sowie die Rauigkeit sowie den Eigenspannungszustand positiv zu verändern. Das Strahlen der Komponente(n) kann auch im zusammengebauten Zustand erfolgen, wobei zumindest bereichsweise auf der Oberfläche und/oder an der Schnittkante und/oder an der Fügestelle der Felge und/oder der Radschüssel im zusammengebauten Zustand gestrahlt wird. Das zumindest bereichsweise Strahlen der Komponente(n) im zusammengebauten Zustand hat den Vorteil, dass neben den vorgenannten Vorteilen, auch die negativ wirkende Wärmeeinflusszone, die sich durch ein beispielsweise thermisches Fügen an einer Fügestelle der Felge und/oder der Radschüssel ausbildet, durch Verfestigen der Fügestelle respektive des um die Fügestelle angeordneten Bereichs kompensiert werden kann. Des Weiteren wird das Strahlen verwendet, wenn ein unbeschichteter, vergütbarer Stahlwerkstoff verwendet wird, und die (erste) Wärmebehandlung respektive die indirekte oder direkte Warmumformung nicht in einer inerten Umgebung durchgeführt wird, um eine im Zuge der Wärmebehandlung in normaler Atmosphäre entstehende Zunderschicht auf der Oberfläche bzw. auf den Oberflächen der Komponente(n) im Wesentlichen zu entfernen. Die zu strahlende Komponente ist unbeschichtet.

Gemäß einer weiteren Ausgestaltung des erfindungsgemäßen Verfahrens kann nach dem Strahlen eine zweite Wärmebehandlung zumindest bereichsweise an der Felge und/oder der Radschüssel einzeln oder an der Felge und/oder der Radschüssel im zusammengebauten Zustand durchgeführt werden. Die Wärmbehandlung kann bei einer Temperatur zwischen 150°C und unterhalb von 650°C, insbesondere unterhalb von 600°C, vorzugsweise unterhalb von 550°C, durchgeführt werden. Die Dauer der Wärmebehandlung ist abhängig von der Zusammensetzung und der Materialdicke des entsprechenden Stahlwerkstoffes sowie von den einzustellenden Eigenschaften bzw. Oberflächenbeschaffenheit, insbesondere des gehärteten (vergüteten) und gestrahlten Bereichs. Die zweite Wärmebehandlung kann ein Anlassen sein, insbesondere bei Temperaturen oberhalb von 300°C, um im Härtegefüge, welches sehr spröde ist, eine hohe Zähigkeit bei ausreichender Festigkeit und Duktilität einzustellen, wodurch sich ein für die zyklische Belastung von Fahrzeugrädern optimaler Gefügezustand ergeben kann. Des Weiteren kann durch das Anlassen und damit einhergehenden Entspannung des Gefüges die Gefahr von wasserstoffinduzierter Rissbildung gesenkt werden. Liegt die Temperatur bei der zweiten Wärmebehandlung unterhalb von 300°C, insbesondere zwischen 150 und 250°C kann insbesondere die zumindest bereichsweise, vorzugsweise vollständig gestrahlte(n) Oberfläche(n) der einzelnen Komponente(n) oder der Komponente(n) im zusammengebauten Zustand für einen Lackierprozess vorbereitet respektive konditioniert werden.

Gemäß einer Ausführung wird für die Felge und/oder die Radschüssel ein vergütbarer Stahlwerkstoff mit einem Kohlenstoffgehalt von mindestens 0,15 Gew.-%, insbesondere von mindestens 0,22 Gew.-%, vorzugsweise von mindestens 0,27 Gew.-% bereitgestellt. Der vergütbare Stahlwerkstoff kann ein Vergütungsstahl, insbesondere der Güte C22, C35, C45, C55, C60, 42CrMo4, ein manganhaltiger Stahl, insbesondere der Güte 16MnB5, 16MnCr5, 20MnB5, 22MnB5, 30MnB5, 37MnB4, 37MnB5, 40MnB4, ein Einsatzstahl, ein lufthärtender Stahl oder ein mehrschichtiger Stahl-Werkstoffverbund, beispielsweise mit zwei, vorzugsweise mit drei Stahllagen, von denen mindestens eine der Lagen vergütbar ist, sein. Je nach Zusammensetzung des vergütbaren Stahlwerkstoffes sind entsprechende Kenngrößen, wie zum Beispiel die A_{c1}-Temperatur, A_{c3}-Temperatur und weitere Kenngrößen für die Wärmebehandlung aus sogenannten ZTU-Diagrammen entnehmbar.

Der zweite Aspekt der Erfindung betrifft eine Verwendung des nach dem erfindungsgemäßen Verfahren hergestellten Fahrzeugrades für Personenkraftwagen, Nutzfahrzeuge, Lastkraftwagen, Sonderfahrzeuge, Busse, Omnibusse, ob mit Verbrennungsmotor und/oder elektrischem Antrieb, Anhänger oder Trailer. Je nach Fahrzeugtyp ist das Fahrzeugrad mit seiner Radschüssel und Felge mit entsprechenden Materialdicken, welche entlang des jeweiligen Querschnitts auch variieren können, belastungs- und/oder gewichtsoptimiert ausgelegt. Die Radschüssel ist nicht nur auf eine einteilige Ausführung beschränkt, vielmehr kann sie als Tailored Product ausgeführt und/oder aus einer mehrteiligen Ausführung zusammengesetzt sein.

### Kurze Beschreibung der Zeichnungen

Im Folgenden wird die Erfindung anhand von Zeichnungen näher erläutert. Im Einzelnen zeigen
- Fig. 1: ein Verfahrensablauf nach einer ersten Ausführungsform der Erfindung,
- Fig. 2: ein Verfahrensablauf nach einer zweiten Ausführungsform der Erfindung und
- Fig. 3: Ergebnisse einer Schwingfestigkeitsuntersuchung an unterschiedlichen Fahrzeugrädern.

### Beschreibung der bevorzugten Ausführungsformen

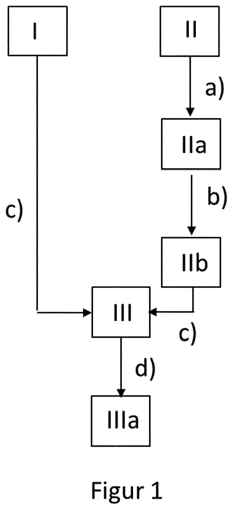

In Fig. 1 ist eine Verfahrensabfolge nach einer ersten Ausführungsform der Erfindung dargestellt. Für die herzustellende Radschüssel (II) wird ein vergütbarer Stahlwerkstoff mit einem Kohlenstoffgehalt von mindestens 0,15 Gew.-%, insbesondere von mindestens 0,22 Gew.-%, vorzugsweise von mindestens 0,27 Gew.-% bereitgestellt. Vorzugsweise wird für die Radschüssel Stahlwerkstoff, beispielsweise der Güte C22, C35, C45, C55, C60, 42CrMo4, ein manganhaltiger Stahl, vorzugsweise der Güte 16MnB5, 16MnCr5, 20 MnB5, 22MnB5, 30MnB5, 37MnB4, 37MnB5, 40MnB4, ein Einsatzstahl, ein lufthärtender Stahl oder ein mehrschichtiger Stahl-Werkstoffverbund, beispielsweise mit drei Stahllagen, von denen mindestens eine der Lagen vergütbar ist, verwendet. Für die Herstellung der Felge (I) wird ein konventioneller Stahlwerkstoff bereitgestellt, beispielsweise ein mikrolegierter Feinkornbaustahl, insbesondere der Güte S420MC. Die Felge (I) und die Radschüssel (II) werden beispielsweise mittels Druckumformen, Zugumformen, Zugdruckumformen, Biegeumformen, Schubumformen, Drückwalzen, Tiefziehen oder mittels einer Kombination der genannten Herstellungsverfahren kalt geformt. Die Stahlwerkstoffe können beschichtet oder vorzugsweise unbeschichtet sein.

Nach dem Formen wird an der Radschüssel (II) zumindest bereichsweise eine erste Wärmebehandlung durchgeführt, d. h., die Radschüssel (II) wird in Schritt a) zumindest bereichsweise oberhalb der A_{c1}-Temperatur, vorzugsweise oberhalb der A_{c3}-Temperatur erwärmt und anschließend zumindest bereichsweise durch Abkühlen gehärtet (indirekte Warmumformung). Vorzugsweise wird die Radschüssel (II) vollständig austenitisiert und anschließend vollständig gehärtet. Das Härtegefüge bestimmt sich durch die Abkühlung und besteht insbesondere im Wesentlichen aus einem martensitischen Gefüge, wobei Martensit mit mindestens 60 Vol.-%, insbesondere mindestens 70 Vol.-%, vorzugsweise mindestens 80 Vol.-%, besonders bevorzugt mindestens 90 Vol.-% im vergüteten Gefüge vorliegt. Die zumindest bereichsweise gehärtete, vorzugsweise vollständig gehärtete Radschüssel (IIa) kann in einem Zwischenschritt, der hier nicht dargestellt ist, einem Beschnitt, beispielsweise mittels eines Lasers, durch welchen sich eine negative wirkende Wärmeeinflusszone auf die Eigenschaften der Komponente entlang der Schnittkante ausbildet, zugeführt werden, bevor an der Radschüssel ein zumindest bereichsweises, vorzugsweise vollständiges Strahlen durchgeführt wird (Schritt b). Die geformte Felge (I) kann vor dem Verbinden mit der Radschüssel (Ila, IIb) in einem zwischengeschalteten Schritt, der hier nicht dargestellt ist, bei Bedarf einem Beschnitt zugeführt werden.

Das Strahlen an der Radschüssel (Ila) wird als Schleuderradstrahlen durchgeführt. Als Mittel zum Strahlen können Partikel, die aus Metallkorn, Glasperlen oder Keramikperlen, insbesondere Mischungen daraus, bestehen, verwendet werden, wobei die Partikel eine Körnung insbesondere in der Größenordnung zwischen 0,02 und 4,0 mm, insbesondere zwischen 0,1 und 2,0 mm, vorzugsweise zwischen 0,3 und 1,0 mm, und eine Härte größer als 400HV1, insbesondere größer als 500HV1, vorzugsweise größer als 600HV1 aufweisen. Vorzugsweise wird ein Metallkorn, insbesondere ein Stahldrahtkorn verwendet, welches eine Körnung bis zu 2 mm und eine Härte größer als 600HV1 aufweist. Das Strahlen wird zumindest bereichsweise, vorzugsweise vollständig auf der Oberfläche der Radschüssel (Ila) durchgeführt, um die Defekte, die sich im Zuge der indirekten Warmumformung ausgebildet haben, im Wesentlichen zu kompensieren. Optional wird auch lokal an kritischen Stellen, insbesondere an den Schnittkanten der Radschüssel (Ila), die nach der indirekten Warmumformung durch einen Laserbeschnitt entstanden sind, gestrahlt, um insbesondere den negativen Einfluss durch die mittels Laserbeschnitt lokal eingebrachte Wärme (Wärmeeinflusszone) durch Verfestigen der Schnittkante respektive des um die Schnittkante angeordneten Bereichs zu kompensieren.

Die zumindest bereichsweise, vorzugsweise vollständig gehärtete und zumindest bereichsweise, vorzugsweise vollständig gestrahlte Radschüssel (IIb) wird in Schritt c) stoff-, kraft-und/oder formschlüssig an die Felge (I) zur Bildung eines Fahrzeugrades (III) angebunden. Vorzugsweise wird die Radschüssel (Ilb) zumindest teilweise über eine Fügenaht, welche als MIG-, MAG-, Laser-, Schweiß- oder Lötnaht ausgeführt sein kann, an die Felge (I) angebunden. An dem Fahrzeugrad (III) kann nach seinem Zusammenbau in einem Schritt d) zumindest bereichsweise, beispielsweise nur die angebundene Radschüssel (Ila) oder vollständig eine zweite Wärmebehandlung, insbesondere bei einer Temperatur zwischen 150°C und unterhalb von 650°C durchgeführt werden, um ein zumindest bereichsweise oder vollständig getempertes Fahrzeugrad (Illa) zu erhalten, welches sich vorzugsweise durch ein geringes Gewicht mit gleichzeitig hoher Betriebsfestigkeit und Sicherheit auszeichnet.

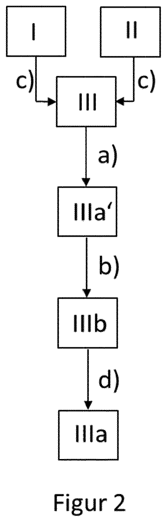

In Fig. 2 ist eine Verfahrensabfolge nach einer zweiten Ausführungsform der Erfindung dargestellt. Für die herzustellende Felge (I) und die herzustellende Radschüssel (II) werden vergütbare Stahlwerkstoffe mit einem Kohlenstoffgehalt von mindestens 0,15 Gew.-%, insbesondere von mindestens 0,22 Gew.-%, vorzugsweise von mindestens 0,27 Gew.-% bereitgestellt. Die Felge (I) und die Radschüssel (II) werden mittels Druckumformen, Zugumformen, Zugdruckumformen, Biegeumformen, Schubumformen, Drückwalzen, Tiefziehen oder mittels einer Kombination der genannten Herstellungsverfahren kalt geformt. Sowohl die Felge (I) als auch die Radschüssel (II) können in einem nicht dargestellten Zwischenschritt auf die erforderlichen Endmaße beschnitten werden. Im Gegensatz zu der Ausführungsform in Fig. 1, wird in Schritt c) die Radschüssel (II) stoff-, kraft- und/oder formschlüssig an die Felge (I) zur Bildung eines Fahrzeugrades (III) angebunden. Vorzugsweise wird die Radschüssel (II) zumindest teilweise über eine Fügenaht, welche als MIG-, MAG-, Laser-, Schweiß- oder Lötnaht ausgeführt sein kann, an die Felge (I) angebunden.

Die Komponenten (Felge und Radschüssel) im zusammengebauten Zustand des Fahrzeugrades (III) werden in einem Schritt a) zumindest bereichsweise, vorzugsweise vollständig auf eine Temperatur oberhalb der A_{c1}-Temperatur, vorzugsweise oberhalb der A_{c3}-Temperatur erwärmt respektive durchwärmt und anschließend die warmen Komponenten respektive das warme bzw. durchwärmte Fahrzeugrad (III) durch gezielte Abkühlung zumindest bereichsweise, insbesondere vollständig gehärtet. Das eingestellte Härtegefüge bestimmt sich durch die Abkühlung und besteht insbesondere im Wesentlichen aus einem martensitischen Gefüge, wobei Martensit mit mindestens 60 Vol.-%, insbesondere mindestens 70 Vol.-%, vorzugsweise mindestens 80 Vol.-%, besonders bevorzugt mindestens 90 Vol.-% im vergüteten Gefüge vorliegt.

An dem zumindest bereichsweise, insbesondere vollständig gehärteten Fahrzeugrad (Illa') wird ein Schleuderradstrahlen durchgeführt. Als Mittel zum Strahlen wird vorzugsweise ein Stahldrahtkorn verwendet, welches eine Körnung bis zu 2 mm und eine Härte größer als 600HV1 aufweist. Das Strahlen wird zumindest bereichsweise, vorzugsweise vollständig auf der Oberfläche des Fahrzeugrades (Illa) durchgeführt, um die Defekte, die sich im Zuge der (indirekten) Warmumformung respektive des Härtens ausgebildet haben, im Wesentlichen zu kompensieren. Zusätzlich kann auch lokal an kritischen Stellen, insbesondere die negativ wirkende Wärmeeinflusszone, die sich durch ein beispielsweise thermisches Fügen an einer Fügestelle der Felge und der Radschüssel ausgebildet hat, durch Verfestigen der Fügestelle respektive des um die Fügestelle angeordneten Bereichs positiv Einfluss genommen werden. Des Weiteren kann das Strahlen vorteilhaft, bei den verwendeten unbeschichteten, vergütbaren Stahlwerkstoffen, bei denen sich im Zuge der (ersten) Wärmebehandlung respektive die indirekte oder direkte Warmumformung in normaler Atmosphäre eine Zunderschicht auf der Oberfläche bzw. auf den Oberflächen der Komponente(n) respektive des Fahrzeugrades (Illa') ausbilden kann, diese im Wesentlichen entfernen.

An dem Fahrzeugrad (IIIb) kann zumindest bereichsweise, vorzugsweise vollständigen Strahlen in einem Schritt d) zumindest bereichsweise, vorzugsweise vollständig eine zweite Wärmebehandlung, insbesondere bei einer Temperatur zwischen 150°C und unterhalb von 650°C, durchgeführt werden, um ein zumindest bereichsweise oder vollständig getempertes Fahrzeugrad (Illa) zu erhalten, welches sich vorzugsweise durch ein geringes Gewicht mit gleichzeitig hoher Betriebsfestigkeit und Sicherheit auszeichnet.

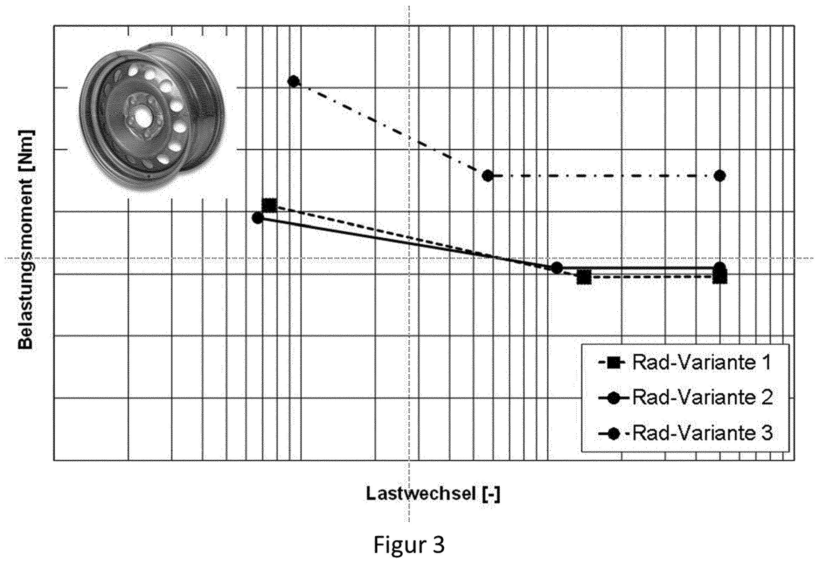

In der Umlaufbiegeprüfung (Richtlinie Nr. 287 § 30 StVZO) wurden drei Fahrzeugrad-Varianten mit unterschiedlichen Stahlwerkstoffen und Oberflächenkonditionierungen einer wechselnden Belastung unterzogen. Die erste Fahrzeugrad-Variante (1) wurde aus einem Dualphasen-Stahl der Güte DP600 mit einer Blechdicke von 3,5 mm gefertigt. Die zweite und dritte Kraftfahrzeug-Varianten (2, 3) wurden aus einem vergütbaren Stahwerkstoff, einem 22MnB5 mittels direkter Warmumformung mit einer Blechdicke von jeweils 3 mm gefertigt. Durch eine gezielte Abkühlung konnte ein Härtegefüge mit einem im Wesentlichen martensitischen Gefüge, wobei Martensit mit mindestens 80 Vol.-% im vergüteten Gefüge vorlag, eingestellt werden. Der Unterschied zwischen der Variante (2) und (3) ist, dass die Variante (3) nach der direkten Warmumformung vollständig mittels Schleuderradstrahlen mit einem im Wesentlichen arrondierten Stahldrahtkorn mit einer Körnung von bis zu 2 mm und einer Härte von ca. 640HV1 gestrahlt wurde. Das Ergebnis der Prüfung ist in Fig. 3 dargestellt, wobei auf der x-Achse die Anzahl der Lastzyklen bis zum Versagen und auf der y-Achse das Belastungsmoment aufgetragen sind. In Fig. 3 ist deutlich zu erkennen, dass ein Strahlen eines Fahrzeugrades aus einem vergüteten Stahlwerkstoff sich positiv auf die Komponentenperformance auswirkt, insbesondere zu einem Lebensdaueranstieg der zyklisch belasteten Komponenten führt. Das Strahlen bewirkt neben einem Verfestigen der Komponentenoberfläche (global) bzw. kritische Stellen an der Komponente (lokal) auch eine Verminderung der Rauheit, die sich zudem positiv auf die Lebensdauer der Komponente(n) auswirkt.

Die Erfindung ist nicht auf die oben beschriebenen Ausführungsformen sowie auf die allgemeine Beschreibung beschränkt. Das nach dem erfindungsgemäßen Verfahren hergestellte Fahrzeugrad (III, IIIa) kann für Personenkraftwagen, Nutzfahrzeuge, Lastkraftwagen, Sonderfahrzeuge, Busse, Omnibusse, ob mit Verbrennungsmotor und/oder elektrischem Antrieb, Anhänger oder Trailer, verwendet werden.

## Patentansprüche

1. Verfahren zur Herstellung eines Fahrzeugrades in Blechbauweise, mit einer Felge zur Aufnahme eines Reifens und eine an die Felge stoff-, kraft- und/oder formschlüssig angebundene Radschüssel mit einem Anbindungsbereich zur lösbaren Anbindung an einen Radträger, umfassend die Schritte, dass für die Felge und die Radschüssel jeweils ein Stahlwerkstoff bereitgestellt wird, und eine Felge und eine Radschüssel aus dem jeweiligen Stahlwerkstoff geformt werden, wobei der Stahlwerkstoff für die Felge und/oder die Radschüssel vergütbar und unbeschichtet ist, wobei
- vor dem Verbinden der Radschüssel mit der Felge zur Bildung eines Fahrzeugrades an der Felge und/oder der Radschüssel einzeln im Zuge des Formens oder nach dem Formen mindestens eine erste Wärmebehandlung zumindest bereichsweise durchgeführt wird oder
- nach dem Verbinden der Radschüssel mit der Felge zur Bildung eines Fahrzeugrades an der Felge und/oder der Radschüssel im zusammengebauten Zustand mindestens eine erste Wärmebehandlung zumindest bereichsweise durchgeführt wird,
wobei nach der ersten Wärmebehandlung eine Abkühlung derart erfolgt, dass sich im vergütbaren Stahlwerkstoff der Felge und/oder der Radschüssel zumindest bereichsweise im vergüteten Bereich ein Härtegefüge einstellt, wobei nach der ersten Wärmebehandlung an der Felge und/oder der Radschüssel einzeln oder an der Felge und/oder der Radschüssel im zusammengebauten Zustand zumindest bereichsweise ein Strahlen durchgeführt wird, **dadurch gekennzeichnet, dass** für das Strahlen Partikel eingesetzt werden, die eine Körnung zwischen 0,02 und 4,0 mm, insbesondere zwischen 0,1 und 2,0 mm, vorzugsweise zwischen 0,3 und 1,0 mm, und eine Härte größer als 400HV1, insbesondere größer als 500HV1, vorzugsweise größer als 600HV1 aufweisen, wobei das Strahlen als Schleuderradstrahlen durchgeführt wird.

2. Verfahren nach Anspruch 1, wobei die Partikel aus Metallkorn, Glasperlen oder Keramikperlen bestehen, insbesondere Mischungen daraus.

3. Verfahren nach einem der vorgenannten Ansprüche, wobei das Strahlen zumindest bereichsweise auf der Oberfläche und/oder an der Schnittkante der Felge und/oder der Radschüssel einzeln oder zumindest bereichsweise auf der Oberfläche und/oder an der Schnittkante und/oder an der Fügestelle der Felge und/oder der Radschüssel im zusammengebauten Zustand durchgeführt wird.

4. Verfahren nach einem der vorgenannten Ansprüche, wobei nach dem Strahlen eine zweite Wärmebehandlung zumindest bereichsweise an der Felge und/oder der Radschüssel einzeln oder an der Felge und/oder der Radschüssel im zusammengebauten Zustand durchgeführt wird.

5. Verfahren nach einem der vorgenannten Ansprüche, wobei für die Felge und/oder die Radschüssel ein vergütbarer Stahlwerkstoff mit einem Kohlenstoffgehalt von mindestens 0,15 Gew.-%, insbesondere von mindestens 0,22 Gew.-%, vorzugsweise von mindestens 0,27 Gew.-% bereitgestellt wird, insbesondere ein Vergütungsstahl, vorzugsweise der Güte C22, C35, C45, C55, C60, 42CrMo4, ein manganhaltiger Stahl, vorzugsweise der Güte 16MnB5, 16MnCr5, 20 MnB5, 22MnB5, 30MnB5, 37MnB4, 37MnB5, 40MnB4, ein Einsatzstahl, ein lufthärtender Stahl oder ein mehrschichtiger Stahl-Werkstoffverbund, beispielsweise mit zwei, insbesondere mit drei Stahllagen, von denen mindestens eine der Lagen vergütbar ist.

6. Verwendung eines nach einem der vorgenannten Ansprüche hergestellten Fahrzeugrades für Personenkraftwagen, Nutzfahrzeuge, Lastkraftwagen, Sonderfahrzeuge, Busse, Omnibusse, ob mit Verbrennungsmotor und/oder elektrischem Antrieb, Anhänger oder Trailer.

## Claims

1. Method for producing a vehicle wheel of sheet metal construction, having a rim for receiving a tyre and a wheel disc which is attached to the rim by a substance-to-substance bond, a force fit and/or a form fit and has an attachment region for detachable attachment to a wheel carrier, comprising the following steps: providing a respective steel material for the rim and the wheel disc, and shaping a rim and a wheel disc from the respective steel material, wherein the steel material for the rim and/or the wheel disc can be quenched and tempered and is uncoated, wherein,
- before the wheel disc is connected to the rim to form a vehicle wheel, at least one first heat treatment is carried out at least in certain regions on the rim and/or the wheel disc individually in the course of the shaping operation or after the shaping operation, or,
- after the wheel disc has been connected to the rim to form a vehicle wheel, at least one first heat treatment is carried out at least in certain regions on the rim and/or the wheel disc in the assembled state,
wherein, after the first heat treatment, cooling is performed in such a way that a hardened microstructure is set in the steel material, that can be quenched and tempered, of the rim and/or of the wheel disc at least in certain regions in the quenched and tempered region, wherein, after the first heat treatment, a blasting operation is carried out at least in certain regions on the rim and/or the wheel disc individually or on the rim and/or the wheel disc in the assembled state, **characterized in that**, for the blasting operation, use is made of particles which have a grain size between 0.02 and 4.0 mm, in particular between 0.1 and 2.0 mm, preferably between 0.3 and 1.0 mm, and a hardness greater than 400 HV1, in particular greater than 500 HV1, preferably greater than 600 HV1, wherein the blasting is carried out in the form of centrifugal wheel blasting.

2. Method according to Claim 1, wherein the particles consist of metal grain, glass beads or ceramic beads, in particular mixtures of these.

3. Method according to either of the preceding claims, wherein the blasting operation is carried out at least in certain regions on the surface and/or at the cut edge of the rim and/or of the wheel disc individually or at least in certain regions on the surface and/or at the cut edge and/or at the join of the rim and/or the wheel disc in the assembled state.

4. Method according to one of the preceding claims, wherein, after the blasting operation, a second heat treatment is carried out at least in certain regions on the rim and/or the wheel disc individually or on the rim and/or the wheel disc in the assembled state.

5. Method according to one of the preceding claims, wherein, for the rim and/or the wheel disc, a steel material which can be quenched and tempered and has a carbon content of at least 0.15% by weight, in particular at least 0.22% by weight, preferably at least 0.27% by weight is provided, in particular a heat-treated steel, preferably of the grade C22, C35, C45, C55, C60, 42CrMo4, a manganese-containing steel, preferably of the grade 16MnB5, 16MnCr5, 20MnB5, 22MnB5, 30MnB5, 37MnB4, 37MnB5, 40MnB4, a case-hardened steel, an air-hardened steel or a multi-layered steel material composite, for example having two, in particular three steel layers, at least one of the layers of which being able to be quenched and tempered.

6. Use of a vehicle wheel produced according to one of the preceding claims for passenger cars, utility vehicles, lorries, special-purpose vehicles, buses, coaches, whether having a combustion engine and/or an electric drive or a trailer.

## Revendications

1. Procédé de fabrication d'une roue de véhicule en construction en tôle, avec une jante pour recevoir un pneu et un disque de roue relié à la jante par liaison de matière, de force et/ou de forme, avec une zone de liaison destinée à être reliée de manière amovible à un support de roue, comprenant les étapes suivantes, en ce qu'un matériau d'acier est fourni pour la jante et le disque de roue, et une jante et un disque de roue sont formés à partir du matériau d'acier respectif, le matériau d'acier pour la jante et/ou le disque de roue étant apte au traitement de trempe et de revenu et non revêtu,
- avant la liaison du disque de roue à la jante pour former une roue de véhicule, au moins un premier traitement thermique étant effectué au moins par zones sur la jante et/ou le disque de roue individuellement au cours du formage ou après le formage, ou
- après la liaison du disque de roue à la jante pour former une roue de véhicule, au moins un premier traitement thermique étant effectué au moins par zones sur la jante et/ou le disque de roue à l'état assemblé,
un refroidissement étant effectué après le premier traitement thermique de telle sorte qu'une structure dure s'établit au moins par zones dans la zone trempée dans le matériau d'acier apte au traitement de trempe et de revenu de la jante et/ou du disque de roue, un grenaillage étant effectué au moins par zones après le premier traitement thermique sur la jante et/ou le disque de roue individuellement ou sur la jante et/ou le disque de roue à l'état assemblé, **caractérisé en ce que,** pour le grenaillage, des particules qui présentent une granulométrie comprise entre 0,02 et 4,0 mm, notamment entre 0,1 et 2,0 mm, de préférence entre 0,3 et 1,0 mm, et une dureté supérieure à 400 HV1, notamment supérieure à 500 HV1, de préférence supérieure à 600 HV1, sont utilisées, le grenaillage étant effectué sous la forme d'un grenaillage à turbine.

2. Procédé selon la revendication 1, dans lequel les particules sont constituées de grains de métal, de perles de verre ou de perles de céramique, notamment de mélanges de ceux-ci.

3. Procédé selon l'une quelconque des revendications précédentes, dans lequel le grenaillage est effectué au moins par zones sur la surface et/ou sur le bord de coupe de la jante et/ou du disque de roue individuellement, ou au moins par zones sur la surface et/ou sur le bord de coupe et/ou sur le joint de la jante et/ou du disque de roue à l'état assemblé.

4. Procédé selon l'une quelconque des revendications précédentes, dans lequel, après le grenaillage, un deuxième traitement thermique est effectué au moins par zones sur la jante et/ou le disque de roue individuellement ou sur la jante et/ou le disque de roue à l'état assemblé.

5. Procédé selon l'une quelconque des revendications précédentes, dans lequel un matériau d'acier apte au traitement de trempe et de revenu ayant une teneur en carbone d'au moins 0,15 % en poids, notamment d'au moins 0,22 % en poids, de préférence d'au moins 0,27 % en poids est fourni pour la jante et/ou le disque de roue, notamment un acier de trempe et revenu, de préférence de la qualité C22, C35, C45, C55, C60, 42CrMo4, un acier contenant du manganèse, de préférence de la qualité 16MnB5, 16MnCr5, 20MnB5, 22MnB5, 30MnB5, 37MnB4, 37MnB5, 40MnB4, un acier de cémentation, un acier durcissant à l'air ou un composite de matériaux d'acier multicouche, par exemple avec deux, notamment avec trois couches d'acier, dont au moins une des couches est apte au traitement de trempe et du revenu.

6. Utilisation d'une roue de véhicule fabriquée selon l'une quelconque des revendications précédentes pour des voitures particulières, des véhicules utilitaires, des camions, des véhicules spéciaux, des bus, des autocars, qu'ils soient équipés d'un moteur à combustion interne et/ou d'une propulsion électrique, des remorques ou des semi-remorques.
